# EUROPÄISCHE PATENTSCHRIFT

(11) **EP 2 794 345 B1**
(45) Veröffentlichungstag und Bekanntmachung des Hinweises auf die Patenterteilung: **14.03.2018**
(21) Anmeldenummer: 12818476.9
(22) Anmeldetag: 19.12.2012
(51) Int. Cl.: B60P 1/48

(54) **LASTKRAFTWAGEN MIT EINEM MEHRACHSIGEN FAHRGESTELL ZUM TRANSPORTIEREN, ABSETZEN UND AUFNEHMEN VON STÜCKGUT**
HEAVY GOODS VEHICLE HAVING A MULTI-AXLE CHASSIS FOR TRANSPORTING, SETTING DOWN, AND TAKING UP PIECE GOODS
CAMION AVEC CHÂSSIS MULTI-AXES POUR LE TRANSPORT, LE DÉPÔT ET LE CHARGEMENT DE MARCHANDISES DE DÉTAIL

(30) Priorität: 23.12.2011 DE 102011057043
(43) Veröffentlichungstag der Anmeldung: 29.10.2014
(73) Patentinhaber: Scherf, Wilfried, 07768 Hummelshain (DE); Luddeneit, Michael, 07768 Hummelshain (DE)
(72) Erfinder: Scherf, Wilfried, 07768 Hummelshain (DE); Luddeneit, Michael, 07768 Hummelshain (DE)
(74) Vertreter: Freitag, Joachim
(86) Internationale Anmeldenummer: PCT/DE2012/100389
(87) Internationale Veröffentlichungsnummer: WO 2013/091624

(56) Entgegenhaltungen:
- EP-A2- 1 712 412
- DE-A1- 3 405 502
- DE-U1- 8 802 216
- DE-U1- 20 007 538
- GB-A- 1 300 408

## Beschreibung

Die Erfindung betrifft einen Lastkraftwagen mit einem mehrachsigen Fahrgestell zum Transportieren, Absetzen und Aufnehmen von Stückgut, insbesondere für Arbeitsmaschinen, die an beliebigen Gleisanlagen abzusetzen oder aufzunehmen sind.

Aus dem Stand der Technik sind eine Vielzahl von Kransystemen bekannt, die es gestatten, Lasten zu bewegen. Eine Kombination von Kransystemen mit einem Fahrgestell, beispielsweise einem Lastkraftwagen, entsteht zusätzlich zum aufnehmen und absetzten von kompakten Lasten die Möglichkeit diese flexibel über größere Strecken an beliebige Orte zu transportieren. Ein solches Lade- und Transportsystem ist somit unabhängig von zusätzlichen Geräten, wie beispielsweise Kranen oder Gabelstaplern.

Eine etablierte Einrichtung zum Bewegen besonders schwerer Lasten sind beispielsweise Absetzkipper-Aufbauten, wie sie aus dem Gebrauchsmuster DE 298 10 104 U1 bekannt sind. Diese werden auf einem Fahrgestell montiert und sind vorzugsweise zum Aufnehmen, Absetzen und Transportieren von standardisierten Wechselbehältern vorgesehen. Sie weisen eine horizontale Verladeplattform auf, in deren Endbereich zwei hydraulisch bewegte Ausleger eine vertikale Schwenkbewegung über das Fahrgestellheck hinaus ausführen. Eine zwischen den Auslegerenden befestigte Last kann somit nach hinten über die Fahrgestelllängsachse aufgenommen oder abgesetzt werden. Zur Stabilisierung des Fahrgestells während des Auf- und Absetzens sind ausfahrbare hintere Abstützungen im hinteren Bereich der Verladeplattform angeordnet, welche dem durch die hinter der letzten Fahrgestellachse abzusetzende Last entstehenden Moment entgegen wirken. Um eine Last an einem gewünschten Ort abzusetzen, ist für den Einsatz des nach hinten ausschwenkenden Absetzkippers jedoch immer ein Mindest-Bewegungsraum erforderlich, der den Abmessungen der Fahrgestelllänge, inklusive des ausgeschwenkten Auslegers, zuzüglich eines Rangierabstands entspricht. An schwer zugänglichen Orten ist deshalb ein Absetzen von Lasten nicht möglich. Weiterhin besteht aufgrund der Befestigung an den zwei Auslegerenden keine Möglichkeit, die Last durch eine Verdrehung um ihre Hochachse auszurichten.

Eine Lösung die deutlich weniger Raum beansprucht, ist mit dem Gebrauchsmuster DE 201 13 419 U1 veröffentlicht. Das Prinzip des Absetzkippers wurde hier für das Aufnehmen und Absetzen einer Last, seitlich zur Fahrgestelllängsachse angepasst. Dazu führt jeweils ein am vorderen und am hinteren Ende der Verladeplattform angebrachter Ausleger eine vertikale Schwenkbewegung seitlich über die Fahrgestellflanke hinaus aus. Zur Aufnahme des Lastmoments verfügt das Fahrgestell auf der Absetzseite über zwei seitliche Abstützungen. Diese sind über eine Verschiebeeinrichtung ausziehbar, unterhalb der Verladeplattform am Fahrgestell befestigt. Auch bei dieser Lösung besteht aufgrund der Befestigung an den zwei Auslegerenden keine Möglichkeit, die Last durch eine Verdrehung um ihre Hochachse auszurichten.

Des Weiteren ist in der DE 200 07 538 U1 eine Lösung zum Bewegen von Containern offenbart, bei der seitliches und rückwärtiges Absetzen und Aufnehmen der Last mittels einer Drehscheibe am Ende der Ladepritsche des Fahrzeugs vorhanden ist. Dabei kommt jedoch nachteilig ein längenverstellbarer Heberahmen zum Einsatz, der eine Höhenbegrenzung beim Aufnehmen und Absetzen der Last unmöglich macht.

Ferner ist aus der DE 88 02 216 U1 ein mehrachsiges Transportfahrzeug zum Auf- und Absetzen von Containern bekannt, das einen in Längsrichtung der Ladefläche verfahrbaren Aufnahmeschlitten aufweist. Nachteilig ist hier die zusätzliche lasttragende Plattform mit longitudinaler Bewegungsmechanik und weiteren Antrieben nebst Steuerung.

In der Offenlegungsschrift EP 1 712 412 A2 ist eine Möglichkeit aufgezeigt, wie eine am Ausleger hängende Last durch Verdrehung um ihre Hochachse ausgerichtet werden kann. Bei gleichbleibendem Grundaufbau gemäß einem Absetzkipper, der die Last mittels einer Schwenkbewegung über das Heck des Fahrgestells bewegt, ist hier zwischen den Auslegerenden eine horizontal orientierte Traverse befestigt. Zur Aufnahme der Traverse in den Auslegerenden sind zwei kurze Lagerwellen vorgesehen. Beide Lagerwellen sind über eine drehbare Lagerbuchse mit einem Winkelelement verbunden, welche wiederum mit einem oder mehreren die Winkel verbindenden und die Traverse bildenden Strangprofilen fest verbunden sind. Mittig in der Traverse befindet sich, an einer lotrechten Drehachse befestigt, eine Aufnahmevorrichtung für die Last. Diese ist motorisch angetrieben, sodass die Last fernbedienbar um ihre Hochachse gedreht werden kann. Der Schwerpunkt der gesamten Anordnung liegt dabei unterhalb der Drehachse der Lagerbuchsen, sodass die Aufnahmevorrichtung immer der Schwerkraft folgend nach unten weist. Durch diese Aufnahmevorrichtung wird eine sehr komfortable Möglichkeit geschaffen, eine Last entsprechend der örtlichen Gegebenheiten an der Absetzstelle, z.B. beengte Verhältnisse oder Anfahrtswege zum Weitertransport der Last, auszurichten. Aufgrund der Schwenkbewegung über das Heck ist es aber notwendig das Fahrgestell vor dem Absetzen oder Aufnehmen einer Last zur Absetzstelle auszurichten. Dazu wird jedoch immer der bereits oben beschriebene Bewegungsraum benötigt. Weiterhin ist der Stand der Technik nur zum Transport einer einzelnen Ladung ausgelegt und benötigt zum Durchführen des Aufnahme- und Absetzvorgangs immer auch das für den Transport benötigte Kraftfahrzeug in Form einer Zugmaschine bzw. des Lastkraftwagens, auf dem die Verladeplattform aufgebaut ist. Aufgabe der Erfindung ist es, eine Möglichkeit zum Transportieren, Absetzen und Aufnehmen von einem oder mehreren Stückgütern, z.B. Arbeitsmaschinen, die insbesondere bei beliebigen Gleisanlagen zum Einsatz kommen, zu finden, die mit einem Fahrgestell eines Lastkraftwagens bei engen Zufahrtsbedingungen zu einer Absetz- bzw. Aufnahmestelle ohne spezielle Ausrichtung des Fahrgestells zu einer Gleisanlage ein punktgenaues Aufnehmen oder Absetzen des Stückgutes bei begrenzter Arbeitshöhe gestattet.

Erfindungsgemäß wird die Aufgabe bei einem Lastkraftwagen mit einem mehrachsigen Fahrgestell zum Transportieren, Absetzen und Aufnehmen von Arbeitsmaschinen oder Stückgütern mit einen um eine horizontale Schwenkachse schwenkbaren Teleskopausleger mit zwei Teleskoparmen und einer drehbar gelagerten Traverse, die in Lagern zwischen beweglichen Enden der Teleskoparme angebracht ist und einen mittig an der Traverse angeordneten Lasthaken, der eine um eine zur Traverse orthogonale Achse frei drehbare Lagerung aufweist dadurch gelöst, dass das Fahrgestell einen Heckbereich aufweist, der den schwenkbaren Teleskopausleger auf einer gegenüber dem Fahrgestell um eine Rotationsachse drehbaren Verladeplattform aufweist, wobei der Verladeplattform auf dem Fahrgestell eine auf gleichen Niveau mit der Verladeplattform befindliche Ladefläche in Fahrtrichtung vorgeordnet und mit einem longitudinalen Verladesystem zum Transport des Stückgutes von der Verladeplattform auf die Ladefläche und umgekehrt ausgerüstet ist, die Verladeplattform den Teleskopausleger mit zugehörigen Antrieben und einen Zahnkranz zum Drehen der Verladeplattform um die vertikale Rotationsachse aufweist, wobei in den Zahnkranz einkämmend ein Antriebsritzel eines Antriebsmotors angeordnet ist, der starr am Fahrgestell befestigt ist, um die Verladeplattform um die vertikale Rotationsachse rotieren zu können. In einer vorteilhaften Ausführung weist die Verladeplattform eine Steuereinheit zur Begrenzung des Bewegungsraums des Teleskopauslegers bei einer Schwenkbewegung um eine horizontale Schwenkachse auf, wobei der Teleskopausleger auf eine von dessen Schwenkwinkel abhängige Ausschublänge mittels der Steuereinheit zur Begrenzung des Bewegungsraums mit einer automatischen Höhenbegrenzung von beweglichen Auslegerenden des Teleskopauslegers für jeden beliebigen Schwenkwinkel einstellbar ist.

In einer speziellen Ausgestaltung ist der Antriebsmotor zum Bewegen der Verladeplattform ein Fluidmotor. Alternativ kann der Antriebsmotor zum Bewegen der Verladeplattform auch als Elektromotor ausgeführt sein.

In einer bevorzugten Ausführung der Erfindung sind zur Überwachung einer Maximalhöhe im Bewegungsraum des Teleskopauslegers Wegmesseinheiten an sich zueinander bewegenden Teilen der Teleskoparme und an zum Schwenken vorgesehenen linear antreibenden Schwenkzylindern für die Teleskoparme vorhanden.

In einer weiteren Variante sind die Wegmesseinheiten zur Erfassung der Ausschublänge des Teleskopauslegers an den beweglichen Auslegerenden der Teleskoparme des Teleskopauslegers und Wegmesseinheiten zur Erfassung des Schwenkwinkels des Teleskopauslegers an den linear bewegten Teilen der Schwenkzylinder der Teleskoparme angebracht.

Vorteilhaft weisen Ladefläche und Verladeplattform ein ineinander übergehendes rollfähiges Verladesystem zum Bewegen des Stückguts auf, das in einer speziellen Ausgestaltung als ein ineinander übergehendes gleisartiges Schienensystem zum longitudinalen Bewegen des Stückgutes auf dem Lastkraftwagen ausgebildet ist, wobei der Schienenabstand zweckmäßig einstellbar ist.

In einer vorteilhaften Ausführung weist das Fahrgestell eine Energieeinheit zum autarken Betrieb der Verladeplattform auf, wobei die Energieeinheit ein Stromerzeuger ist, der zum elektrischen Betreiben einer hydraulischen Antriebseinheit vorgesehen ist.

In einer alternativen Variante weist das Fahrgestell eine Energieeinheit zum autarken Betrieb der Verladeplattform auf, wobei als Energieeinheit der Verbrennungsmotor des Lastkraftwagens zum Betrieb einer hydraulischen Antriebseinheit nutzbar ist.

Das Fahrgestell kann in einer dritten Variante aber auch eine Energieeinheit zum autarken Betrieb der Verladeplattform in Form eines Stromerzeugers aufweisen, der zum Betreiben eines Elektroantriebs mindestens für die Realisierung der Drehbewegung der Verladeplattform vorgesehen ist.

Die Steuereinheit zur Begrenzung des Bewegungsraums des Teleskopauslegers weist vorteilhaft eine Positionsberechnung auf, die auf Basis einer Winkel-Längensteuerung und -speicherung für gewünschte Absetz- und Aufnahmepunkte des Stückgutes in einem den Lastkraftwagen umgebenden Gelände vorgesehen ist.

In einer speziellen Ausgestaltung weist eine Speichereinheit eine Speicherung von Absetz- und Aufnahmepositionen, von Ausschublängen der Teleskoparme bis zu einer Maximalhöhe und von Absetzpositionen auf der Verladeplattform auf, sodass für einen nächsten Bewegungsablauf von Stückgut mittels der Verladeplattform ein einfaches roboterähnliches Nachfahren der gespeicherten Positionen realisierbar ist.

Die Steuereinheit der Verladeplattform kann zweckmäßig eine mit Bedienelementen für sämtliche Bewegungsfunktionen ausgelegte Fernbedienung aufweisen.

In einer weiteren vorteilhaften Variante der Erfindung ist am Fahrgestell mindestens eine in der Nähe der Rotationsachse, unterhalb der Verladeplattform angebrachte Abstützeinrichtung zur Stabilisierung des Fahrgestells im Bereich der Verladeplattform beim Auf- und Abladen des Stückgutes angebracht, wobei die Abstützeinrichtung beidseitig transversal zur Fahrtrichtung ausfahrbare, höhenverstellbare Stützfüße aufweist. Dabei findet eine Verladeplattform Verwendung, wie sie im Wesentlichen bereits aus der Gebrauchsmusterschrift DE 298 10 104 U1 bekannt ist.

Die Erfindung soll nachfolgend anhand von Ausführungsbeispielen näher erläutert werden. Dazu zeigen:
- Fig. 1:: den prinzipiellen Aufbau eines mehrachsigen Fahrgestells,
- Fig. 2:: eine detaillierte Darstellung des Heckbereichs des Fahrgestells mit einem Schnitt durch die Fahrgestell-Mittenebene
- Fig. 3:: die Möglichkeiten der Aufnahme von Lasten auf der Verladeplattform,
- Fig. 4:: eine um den Heckbereich des Fahrgestells gedrehte Verladeplattform,
- Fig. 5:: den Verlauf einer beispielhaften Bahnkurve der Teleskopauslegerenden bei einer Ausschwenkbewegung,
- Fig. 6:: den prinzipiellen Aufbau der Traverse und deren Befestigung an den Auslegerenden.

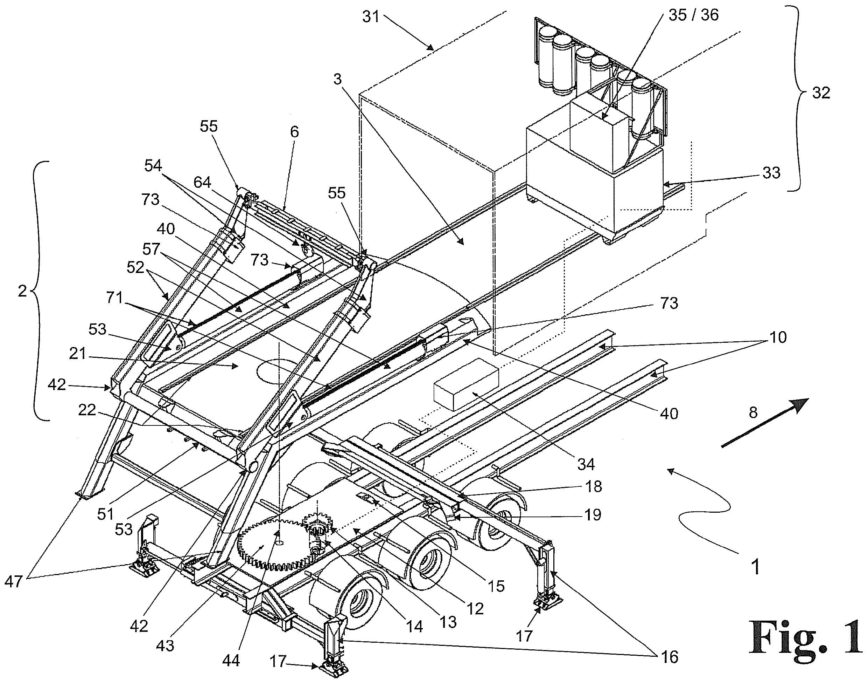

Ein mehrachsiges Fahrgestell 1 weist gemäß Fig. 1 zwei horizontal und in Fahrtrichtung 8 ausgerichtete Fahrgestelllängsträger 10 auf. Diese sind parallel zueinander, symmetrisch zu einer vertikal und in Fahrtrichtung 8 ausgedehnten Fahrgestell-Mittelebene 11 und entsprechend der Spurweite des Fahrgestells 1 beabstandet angeordnet. Das Fahrgestell 1 weist einen in Fahrtrichtung 8 orientierten Frontbereich und einen entgegen der Fahrtrichtung orientierten Heckbereich auf. Im Frontbereich ist eine Ladefläche 3 und im Heckbereich eine Verladeplattform 2 angeordnet.

Die Ladefläche 3 weist eine starre Verbindung mit dem Fahrgestell 1 auf und bildet eine horizontale, ebene und rechteckige Fläche, die zwei parallel zur Fahrtrichtung 8 angeordnete Längsseiten aufweist. Auf dem in Fahrtrichtung 8 vordersten Frontbereich der Ladefläche 3 ist eine alle Steuerungs- und Versorgungseinrichtungen für die Verladeplattform aufnehmende Funktionseinheit 32 angeordnet. Bestandteil der Funktionseinheit 32 ist eine Energieeinheit 33, eine Antriebseinheit 34, die entweder hydraulisch, elektrisch oder pneumatisch ausgeführt sein kann, und eine Steuereinheit 35. Im Bereich der rechteckigen Fläche ist eine die Ladefläche 3 einhausende Abdeckung 31 angeordnet.

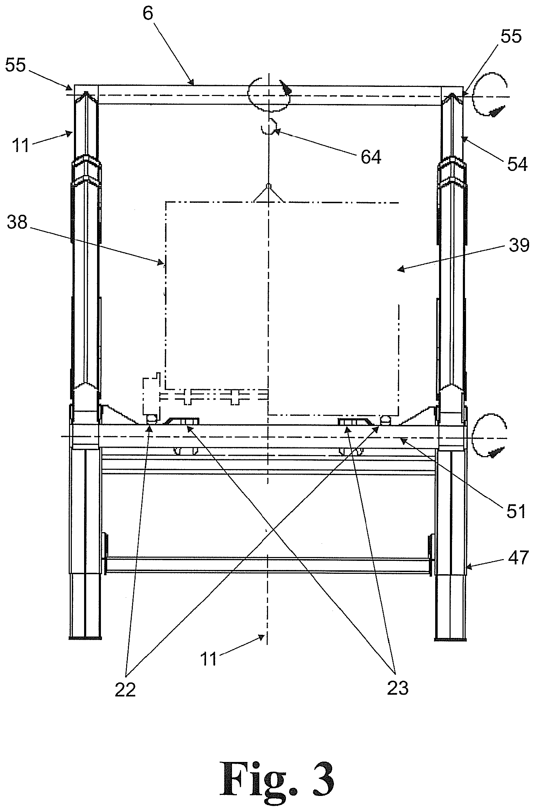

Die Verladeplattform 2 weist einen Basisrahmen 4 mit zwei die Längsseiten der Verladeplattform 2 bildenden Längsträgern 40 auf. In einer Transportstellung der Verladeplattform 2 sind diese Längsträger 40 parallel und symmetrisch zur Fahrgestell-Mittenebene 11 (nur in Fig. 3 dargestellt) ausgerichtet. Die Längsträger 40 fest verbindend, sind zwischen diesen transversal angeordneten Querverbindungselemente (nicht gezeichnet) angeordnet. An der dem Fahrgestell 1 zugewandten Unterseite weist der Basisrahmen 4 an der dem Schwerpunkt der Verladeplattform 2 entsprechenden Stelle einen mit den Querverbindungselementen verbundenen, horizontal orientierten Zahnkranz 43 auf. Auf dem Zahnkranz 43 ist die Verladeplattform 2 gegenüber dem Fahrgestell 1 um eine senkrechte Rotationsachse 44 drehbar auf dem Fahrgestell 1 angeordnet. Im Bereich des Basisrahmens 4, auf der Oberseite der Querverbindungselemente weist die Verladeplattform 2 ebenfalls eine horizontal ausgerichtete, rechteckige Abstellfläche 21 auf.

Die das Zentrum des Zahnkranzes 43 durchstoßene Rotationsachse 44 der Verladeplattform 2 ist in der Fahrgestell-Mittenebene 11 angeordnet und in Fahrtrichtung 8 in einer Position, welche die Drehbewegung der Verladeplattform 2 um den Heckbereich des Fahrgestells 1 ermöglicht. Dem Zahnkranz 43 gegenüberliegend, ist im Heckbereich des Fahrgestells 1, eine fest mit dem Fahrgestell 1 verbundene und das Lager des Zahnkranzes 43 aufnehmende Trägerplatte 12 angeordnet. In den Zahnkranz 43 greift ein Antriebsmotor 14 mit einem Antriebsritzel 13 achsparallel zur Rotationsachse 44 ein. Der Antriebsmotor 14 weist eine Verbindung zur Antriebseinheit 34 auf und ist ebenfalls auf der Trägerplatte 12 angeordnet.

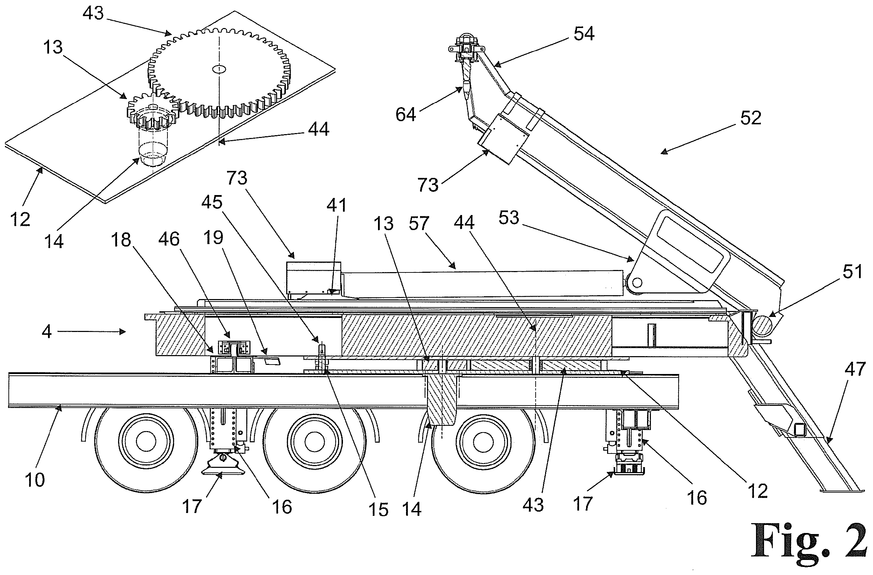

In dem in Fahrtrichtung 8 weisenden vorderen Bereich der in Transportstellung befindlichen Verladeplattform 2 weist der Basisrahmen 4 in der Fahrgestell-Mittenebene 11, wie in Fig. 2 dargestellt, einen senkrecht angeordneten Sicherungszapfen 45 auf. Diesem gegenüber ist, auf gleicher axialer Position auf der Trägerplatte 12, ein den Sicherungszapfen 45 aufnehmendes Zapfenlager 15 angeordnet.

Ebenfalls im vorderen Bereich weist die Verladeplattform 2 an deren Unterseite zwei im jeweils gleichen Abstand zur Rotationsachse 44 angeordnete Laufrollen 46 auf. Den Laufrollen 46 gegenüberliegend ist im Bereich des Fahrgestells 1, unterhalb der Verladeplattform 2 eine Lauffläche 18 angeordnet. Die Lauffläche 18 ist orthogonal zur Fahrtrichtung 8, dem Radius der Laufrollen 46 entsprechend, auf dem Fahrgestell 1 angeordnet und weist an deren lateralen Enden jeweils eine in Richtung des Bodens abgewinkelte Auflauframpe 19 auf.

Auf der dem Fahrgestell 1 abgewandten Fläche des Basisrahmens 4 ist zwischen den Längsträgern 40 eine den Basisrahmen 4 ausfüllende rechteckige Abstellfläche 21 angeordnet. Die Abstellfläche 21 weist eine feste Verbindung mit den Querverbindungselementen des Basisrahmens 4 auf und ist auf gleichen Höhenniveau mit der Ladefläche 3 angeordnet. Ladefläche 3 und Abstellfläche 21 weisen in Fahrtrichtung 8, symmetrisch zur Fahrgestell-Mittenebene 11, ein ineinander übergehendes gleisartiges Schienensystem 22 mit einstellbarer Spurweite und parallel benachbart dazu, zwei auf gleicher Höhe mit dem Schienensystem angeordnete Absetzleisten 23 auf.

Am Ende des Heckbereichs, außerhalb der Grundfläche des Fahrgestells 1, weisen die entgegen der Fahrtrichtung 8 orientierten Enden der Längsträger 40 des Basisrahmens 4 einen Abschluss mit jeweils einem Schwenklager 42 auf. In den Schwenklagern 42 ist ein zur Verladeplattform 2 gehörender Teleskopausleger 5 angeordnet. Der Teleskopausleger 5 weist zwei mit einer Schwenkachse 51 starr verbundene, in einer durch die Schwenklager 42 verlaufenden Ebene parallel zueinander ausgerichtete Teleskoparme 52 auf, wobei die Teleskoparme 52 fluchtend zu den Längsträgern 40 angeordnet sind. Die Schwenklager 42 weisen eine zu den Längsträgern 40 orthogonale und zum Boden horizontale Orientierung auf.

Entlang der Oberseiten der Längsträger 40, ebenfalls mit diesen fluchtend, ist jeweils ein Schwenkzylinder 57 angeordnet. Die Schwenkzylinder 57 weisen eine gelenkige Verbindung zu den Längsträgern 40 und zu den Teleskoparmen 52 auf. Ein Lagerbock 41 ist als ein, in Fahrtrichtung 8 betrachtet, vorderes Gelenk und ein Beschlag 53 des Teleskoparms 52 als ein hinteres Gelenk vorgesehen. Der Lagerbock 41 ist im vorderen Bereich auf der Oberseite der Längsträger 40 angeordnet. Das Lager des Beschlags 53 weist zum Längsträger 40 und ist in der dem Schwenklager 42 zugewandten Hälfte des Teleskoparms 52 angeordnet. In Transportstellung weisen die Schwenkzylinder 57 eine zu den Oberseiten der Längsträgern 40 parallele Lage auf, wobei sich der Teleskopausleger 5 in seiner vordersten Stellung über der Verladeplattform 2 befindet.

Die den Schwenklagern 42 gegenüber angeordneten Enden der Teleskoparme 52 sind als ausfahrbare Auslegerenden 54 ausgeführt und weisen an den äußeren Spitzen jeweils eine Lagerbuchse 55 für einen drehbar gelagerten Halterungsbolzen 56 auf. Zwischen den Halterungsbolzen 56 ist, die Auslegerenden 54 verbindend, eine Traverse 6 angeordnet. Über paarweise an den Halterungsbolzen 56 angeordnete Befestigungslaschen 61 weist die Traverse 6 eine Verbindung zu den Halterungsbolzen 56 auf. Mittig in der Traverse 6 ist ein um seine Hochachse drehbar gelagerter Lasthaken 64 angeordnet, wobei dessen Drehachse orthogonal zur Traverse orientiert ist. Lasthaken 64 und Traverse 6 weisen dabei eine der Schwerkraft folgende pendelnde Ausrichtung zwischen den Teleskoparmen 52 des Teleskopauslegers 5 auf.

An den sich zueinander bewegenden Teilen der Schwenkzylinder 57 und der Teleskoparme 52 ist an deren Gehäusen jeweils eine mit der Steuereinheit 35 verbundene Wegmesseinheit 7 angeordnet. Die Wegmesseinheit 7 weist einen Wegmesssensor (nicht dargestellt) auf, der am jeweils ruhenden Teil der Schwenkzylinder 57 und der Teleskoparme 52 angeordnet ist. Zur Verbindung der Wegmesssensoren zu den bewegten Teilen der Schwenkzylinder 57 und der Teleskoparme 52 ist jeweils ein Messseil 71 vorgesehen. Zur Befestigung des Messseils 71 an den bewegten Teilen ist eine Seilklemmung 72 vorgesehen.

In Verlängerung der Längsträger 40 nach Hinten weisen deren Enden unterhalb der Schwenklager 42 eine ausfahrbare hintere Abstützung 47 auf. Die hintere Abstützung 47 ist dabei um ca. 45° aus der Lotrechten entgegen der Fahrtrichtung 8 nach hinten angewinkelt, sodass die hintere Abstützung 47 schräg auf den Boden aufsetzbar ist.

Das in Fig. 1 dargestellte mehrachsige Fahrgestell 1 ist als ein Sattelauflieger ausgeführt. Auf dem in Fahrtrichtung 8 ausgerichteten Fahrgestell 1 ist die nach vorn orientierte Ladefläche 3 und die nach hinten orientierte und um den Heckbereich drehbare mit dem Teleskopausleger 5 ausgestattete Verladeplattform 2 befestigt. Ladefläche 3 und Abstellfläche 21 der Verladeplattform 2 befinden sich auf gleichen Höhenniveau. Für die Verladeplattform 2 können dabei handelsübliche Aufbauten, z.B. Absetzkipper mit Teleskoparmen der Firma MEILLER (ohne die dort serienmäßig vorgesehene Kippfunktion) eingesetzt werden.

Zur Aufnahme von im Gleisbau verwendeten Arbeitsmaschinen 33, die mit in einem Gleis führbaren Scheibenrädern versehen sind, ist die Ladefläche 3 und die Abstellfläche 21 mit einem ineinander übergehenden, gleisartigen Schienensystem 22 versehen, das in seiner Spurweite einstellbar ist. Wie in Fig. 3 dargestellt, können ein oder mehrere Arbeitsmaschinen 38 mit ihren Scheibenrädern auf dem Schienensystem 22 abgesetzt werden. Das Schienensystem 22 ermöglicht außerdem eine einfache und schnelle Sicherung beim Transport, indem die Scheibenräder der Arbeitsmaschine 38 mit Schnellspannern (nicht gezeigt) am Schienensystem 22 befestigt werden. Das Schienensystem 22 erleichtert außerdem das Bugsieren der Arbeitsmaschinen 38 von der Ladefläche 3 zur Abstellfläche 21 der Verladeplattform 2 sowie umgekehrt. Zum Schutz der Arbeitsmaschinen 38 vor Umwelteinflüssen, ist die Ladefläche 3 mit einer Abdeckung 31 in Form eines Planen- oder eines geschlossenen Kastenaufbaus versehen.

In einer vorteilhaften Ausführung ist der Sattelauflieger auch zum Transport von herkömmlichen Stückgütern 39 wie z.B. Paletten oder Containern verwendbar. Dazu sind Ladefläche 3 und Abstellfläche 21 mit parallel zum Schienensystem 22 und auf gleicher Höhe mit dem Schienensystem 22 befindlichen Absetzleisten 23 versehen, über die Stückgüter 39 auf der Ladefläche 3 oder der Verladeplattform 2 geschoben werden können. Es ist auch möglich, dass mit Radachsen versehene Hilfsgestelle zur Aufnahme und Befestigung von herkömmlichen Lasten verwendet werden, die das Bugsieren dieser Stückgüter 39 erleichtern.

Um die Arbeitsmaschine 38 von einer nicht dargestellten Gleisanlage aufzunehmen, wird der Heckbereich des Sattelaufliegers von einer Zugmaschine in unmittelbarer Nähe zu einer Gleisanlage abgestellt. Aufgrund der drehbaren Verladeplattform 2 ist dazu keinerlei Rangieraufwand erforderlich. Mittels der Energieeinheit 33 kann die Verladeplattform 2 autark, unabhängig vom Vorhandensein der ansonsten zur Energie- und Medienversorgung benötigen Zugmaschine betrieben werden. Somit kann der Sattelauflieger auch längere Zeit an einem Einsatzort verbleiben ohne dabei die Zugmaschine am Einsatzort zu binden.

Für die autarke Versorgung des Sattelaufliegers befindet sich im vorderen Bereich der Ladefläche 3 die auf der Ladefläche 3 montierte Funktionseinheit 32. Die Funktionseinheit 32 umfasst die Komponenten: Energieeinheit 33, Antriebseinheit 34 und Steuereinheit 35. Die Antriebseinheit 34 ist hydraulisch ausgeführt und umfasst im Wesentlichen eine Pumpe als Hydraulikdruckerzeuger und, zum Antrieb der Verladeplattform 2, den als Fluidmotor ausgeführten Antriebsmotor 14, die Schwenkzylinder 57 und Teleskoparme 52, sowie die Abstützeinrichtungen 47 und 16 als Hydraulikdruckverbraucher. Die Steuereinheit 35 umfasst eine Speichereinheit und eine Bedieneinheit 36 mit einer kabelgebundenen oder kabellosen Fernbedienung 37 für sämtliche Bewegungsfunktionen. Mit der Energieeinheit 33 werden die Antriebseinheit 34 und die Steuereinheit 35 mit elektrischen Energie versorgt.

In speziellen Ausführungen kann die Antriebseinheit 34 auch durch eine elektrische oder eine pneumatische Antriebseinheit ersetzt sein.

Es ist ebenfalls denkbar, dass bei Verwendung einer hydraulischen bzw. pneumatischen Antriebseinheit 34 nur einzelne hydraulische oder pneumatische Antriebe der Verladeplattform 2 durch elektrische Antriebe ersetzt werden. Insbesondere kann der für die Drehbewegung der Verladeplattform 2 benutzte Fluidmotor 14 durch einen Elektromotor ersetzt sein. Dazu wird die von der Energieeinheit 33 erzeugte elektrische Energie zur direkten Versorgung elektrischer Antriebe verwendet.

Auch ist es möglich, den Aufbau des vorstehend beschriebenen Sattelaufliegers in analoger Weise direkt als Fahrgestell 1 eines Lastkraftwagens zu modifizieren. Mittels des Verbrennungsmotors und des Hydraulik- und/oder Pneumatiksystems des Lastkraftwagens können die zusätzliche Einheiten, wie Energieeinheit 33 oder Antriebseinheit 34 des oben beschriebenen Fahrgestells 1, wegfallen, jedoch ist der Lastkraftwagen dann als primäre Energieeinheit 33 fest am Einsatzort gebunden.

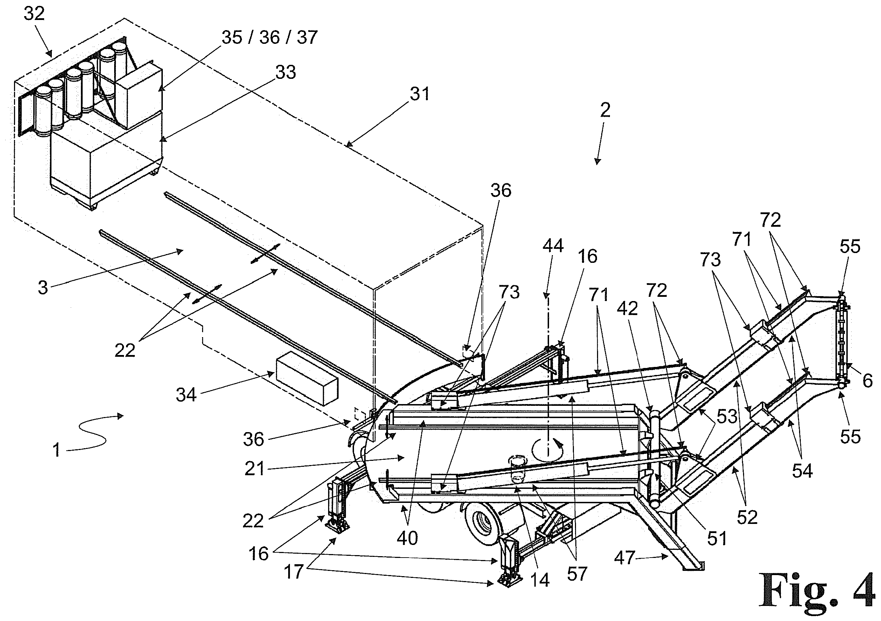

Wie in Fig. 4 dargestellt, kann die Verladeplattform 2 z.B. zum Aufnehmen der hier nicht dargestellten Arbeitsmaschine 38 aus der Transportstellung in eine Ladestellung, um den Heckbereich des Fahrgestells 1 in Richtung Gleisanlage gedreht werden. Dazu wird der die Transportstellung sichernde Sicherungszapfen 45 aus dem Zapfenlager 15 entfernt. Die Arbeitsmaschine 38 befindet sich dann in einer im Schwenkbereich des Teleskopauslegers 5, mittig zwischen den Teleskoparmen 52 befindlichen Position.

Zum Drehen ist der Basisrahmen 4 der Verladeplattform 2 an der Unterseite mit dem horizontal angeordneten Zahnkranz 43 verbunden. Der Zahnkranz 43 ist über ein Großwälzlager, wie es z.B. als Drehlager bei Baggern verwendet wird, drehbar auf der am Fahrgestell 1 befestigten Trägerplatte 12 gelagert und mit dieser verbunden. Die Rotationsachse 44 des Lagers ist senkrecht stehend in der Fahrgestell-Mittenebene 11 angeordnet. In Fahrtrichtung 8 ist die Position der Rotationsachse 44 so gewählt, dass eine vom Fahrgestell 1 im Winkel begrenzte Drehbewegung der Verladeplattform 2 um den Heckbereich des Fahrgestells 1 ausführbar ist. In der Ausgangsstellung der Teleskoparme 52 (vollständig eingefahrener Zustand) kann die Verladeplattform 2, ausgehend von der Transportstellung (Drehwinkel=0°), in einem Drehwinkelbereich von ±105° zu beiden Seiten des Fahrgestells 1 verdreht werden. Die Einhaltung der Grenzen des Drehwinkelbereichs wird von gegenüber der Umfangsfläche des Zahnkranzes 43 angeordneten Winkelsensoren (nicht dargestellt) überwacht. Der für die Drehbewegung verwendete Fluidmotor 14 dreht mit seinem Antriebsritzel 13 achsparallel zur Rotationsachse 44 des Zahnkranzes 43. Dieser ist in der Fahrgestell-Mittenebene 11, in den Zahnkranz 43 kämmend und dem Zahnkranz 43 in Fahrtrichtung 8 vorausliegend angeordnet. Der Fluidmotor 14 ist ebenfalls auf der Trägerplatte 12 montiert.

Der am Ende der Verladeplattform 2 angebrachte Teleskopausleger 5 besteht aus zwei Teleskoparmen 52, die parallel zueinander in einer Ebene liegend starr mit einer Schwenkachse 51 verbunden sind. Die Schwenkachse 51 wird beweglich in den zwei Schwenklagern 42 am Ende der Längsträger 40 aufgenommen. Der Teleskopausleger 5 kann von einer über der Verladeplattform 2 befindlichen Position zu einer außerhalb der Grundfläche der Verladeplattform 2 befindlichen Position um die Schwenkachse 51 ausgeschwenkt werden. Zur Verlängerung des Teleskopauslegers 5 können die Auslegerenden 54 der Teleskoparme 52 ausgeschoben werden. Zum Ausschwenken des Teleskopauslegers 5 werden die Teleskoparme 52 mit Schwenkzylindern 57 bewegt. Die Schwenkzylinder 57 sind gelenkig zwischen den Längsträgern 40 und den Teleskoparmen 52 aufgenommen. Die gelenkige Aufnahme der Schwenkzylinder 57 erfolgt in Lagern, die alle achsparallel zu den Schwenklagern 42 des Teleskopauslegers 5 orientiert sind. Das jeweils vordere Lager ist ein Lagerbock 41, der im vorderen Bereich der Längsträger 40 auf dessen Oberseite angebracht ist. Das jeweils hintere Lager ist an den Beschlägen 53 der Teleskoparme 52 angebracht. Bei einer Schwenkbewegung des Teleskopauslegers 5 führen die Teleskoparme 52 mit den ausschiebbaren Auslegerenden 54 und den die Teleskoparme 52 antreibenden Schwenkzylinder 57 eine Bewegung in einer durch die Längsachsen dieser Teile verlaufenden vertikalen Ebene aus.

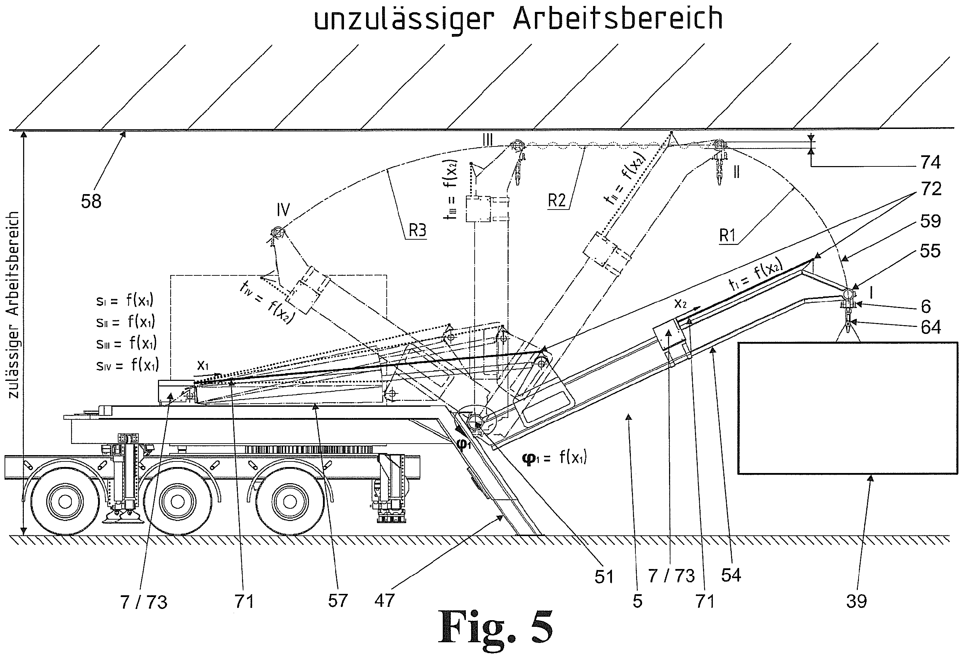

Zur Einhaltung eines Sicherheitsabstands zu über Gleisanlagen befindlichen Oberleitungen ist das Ausschieben der Teleskoparme 52 beim Ausschwenken des Teleskopauslegers 5 in einer erreichbaren Maximalhöhe 58 begrenzt. Eine in Fig. 5 dargestellte Bahnkurve 59 der Spitzen der Auslegerenden 54 weist dadurch einen abgeflachten Mittenbereich auf, in dem die Maximalhöhe 58 eingehalten wird. Die Einhaltung der Bahnkurve 59 wird von der Steuereinheit 35 kontrolliert. Die Steuereinheit 35 ist dazu mit vier Wegmesseinheiten 7 (in Fig. 5 von den Schutzblechen 73 verdeckt) verbunden, mit denen lineare Stellwege der bewegten Teile des Teleskopauslegers 5 erfasst werden können.

Die Wegmesseinheiten 7 werden mit einem Seilzugsystem realisiert. Das Seilzugsystem wird zwischen den bewegten und unbewegten Teilen der Schwenkzylinder 57 und der Teleskoparme 52 aufgespannt. Dazu ist jeweils in der Nähe des den Schwenkzylinder 57 aufnehmenden Lagerbocks 41 (in den Figuren vom Schutzblechen 73 verdeckt) ein Wegmesssensor (in den Figuren vom Schutzblech 73 verdeckt) auf der Oberseite des Gehäuses des Lagerbocks 41 befestigt und an dem am Beschlag 53 des Teleskoparms 52 aufgenommenen Gelenk des Schwenkzylinders 57, eine Seilklemmung 72 befestigt. Am Teleskopausleger 5 ist der Wegmesssensor jeweils im zum Auslegerende 54 weisenden Bereich des unbewegten Teils des Teleskoparms 52 und die Seilklemmung 72 am bewegten Auslegerende 54 befestigt. Das hochflexible und längenstabile Messseil 71 ist am Wegmesssensor auf einer Präzisionsspule (in den Figuren vom Schutzblech 73 verdeckt) aufgewickelt, die je nach Messaufgabe mit einem angepassten Wegmesssensor verbunden ist. Zur Straffung des Messseils 71 und zur Erzeugung einer Rückstellkraft weist die Präzisionsspule eine Feder (nicht sichtbar) auf. Die Wegmesssensoren werden zum Schutz vor Beschädigungen von einem einhausenden Schutzblech 73 umgeben.

Die Wegmesseinheiten 7 ermitteln den linearen Stellweg der zueinander bewegten Teile der Schwenkzylinder 57 und der Teleskoparme 52. Die aufgenommenen linearen Stellwege der Schwenkzylinder 57 werden von der Steuereinheit 35 über Winkelbeziehungen in einen Schwenkwinkel ϕ des Teleskopauslegers 5 umgerechnet. In Abhängigkeit von diesem Schwenkwinkel ϕ wird die Ausschublänge der Auslegerenden 54 nachgeregelt, sodass die zulässige Maximalhöhe 58 bei der Ausschwenkbewegung eingehalten wird. Die Maximalhöhe 58 kann der Steuereinheit 35 über die Bedieneinheit 36 vorgegeben werden.

An der in Fig. 5 dargestellten Bahnkurve 39, wird beispielhaft ein Bewegungsablauf des Teleskopauslegers 5 bei der Aufnahme des am Lasthaken 64 aufgenommenen Stückguts 39 gezeigt. Der Teleskopausleger 5 mit ausgeschobenen Auslegerenden 52 befindet sich dazu in einer über den Heckbereich hinaus ausgeschwenkten Position I. Entsprechend der Ausschublänge sind auch die Messseile 71 der Wegmesseinheiten 7 ausgezogen, sodass die Wegmesssensoren einen der gegenwärtigen Rotationsstellung der Präzisionsspulen entsprechenden Messwert erfassen.

Der erste Abschnitt der Einschwenkbewegung erfolgt, bei unveränderter Ausschublänge des Teleskopauslegers 5, auf einer Kreisbahn R1 um das Schwenklager 42. Bei Erreichen der gewählten Maximalhöhe 58 an der Position II erfolgt zusätzlich zur Einschwenkbewegung eine vom Schwenkwinkel ϕ des Teleskopauslegers 5 abhängige Einschubbewegung der Teleskoparme 52. Getrieben von der Rückstellkraft der oben erwähnten Feder wird dabei auch das Messseil 71 auf der Präzisionsspule aufgewickelt. Die dabei vom Wegmesssensor erfasste Messwertänderung wird von der Steuereinheit 35 gleichzeitig zur Einschubbewegung ausgewertet, sodass bei kontinuierlicher Einschwenkbewegung, in einem kleinen Regelbereich 74, eine ständige Nachregelung der Ausschublänge erfolgen kann. Damit entsteht in der Bahnkurve 59 der abgeflachte Bereich R2 zwischen Position II und III.

Je nach Absetzposition des Stückguts 39 auf der Abstellfläche 21 der Verladeplattform 2 kann der Teleskopausleger 5 entweder auf einer Kreisbahn R3 in seine Endlage an Position IV bewegt werden oder nach dem Erreichen der Senkrechten analog der höhenbegrenzten Einschubbewegung auch wieder höhenbegrenzt ausgeschoben werden, bis das Stückgut 39 an der gewünschten Stelle auf der Verladeplattform 2 abgesetzt ist und der Teleskopausleger 5 in seine Endlage an Position IV bewegt werden kann.

Die in der Steuereinheit 35 integrierte Speichereinheit ermöglicht das Zwischenspeichern von kompletten einmal manuell durchgeführten Ausschwenkbewegungen des Teleskopauslegers 5. Dazu gehört die Position der Arbeitsmaschine 38 auf der Verladeplattform 2, die höhenbegrenzte Bahnkurve 58 des Teleskopauslegers 5 und die Aufnahme- oder Absetzposition der Arbeitsmaschine 38 auf der Gleisanlage oder auf dem den Sattelauflieger umgebenden Gelände. Die Ausschwenkbewegung kann nach dem Abspeichern an diesem Einsatzort beliebig oft automatisch wiederholt werden, wenn die Position des Fahrgestells 1 (z.B. eines Sattelaufliegers ohne Zugmaschine) nicht geändert wurde. Die gespeicherte Ausschwenkbewegung wird, ausgelöst durch einen Bediener, unter Beachtung der Maximalhöhe 58 selbsttätig (automatisch) durchgeführt.

Durch die höhenbegrenzte Ausschwenkbewegung des Teleskopauslegers 5 kann der Aufnahme- und Absetzvorgang auch beschleunigt werden, indem die Drehbewegung der Verladeplattform 2 und die Ausschwenkbewegung des Teleskopauslegers 5 zur gleichen Zeit ausgeführt werden.

Zum manuellen Bewegen der Verladeplattform 2 ist an der Steuereinheit 35 die Bedieneinheit 36 angebracht. Über die Bedieneinheit 36 können alle Antriebe der Verladeplattform 2 von der Ladefläche 3 aus bedient werden. Es besteht auch die Möglichkeit, die Verladeplattform 2 über eine an der Bedieneinheit 36 angeschlossene kabelgebunden oder auch kabellos Fernbedienung 37 zu steuern. Somit kann die Verladeplattform 2 auch von einer außerhalb des Sattelaufliegers befindlichen Position aus bedient werden. Das gestattet dem Bediener eine bessere Kontrolle, da er sich während des Aufnahme- oder Absetzvorgangs direkt im Bereich der Verladeplattform 2 aufhalten kann.

Bei einer weit über die Grundfläche des Fahrgestells 1 reichenden Ausschwenkbewegung des Teleskopauslegers 5 bzw. zum Aufnehmen oder Absetzen einer Arbeitsmaschine 38 wird die Verladeplattform 2 gegen Verkippen gesichert. Dazu werden die an den hinteren Enden der Längsträger 40 der Verladeplattform 2 angebrachten hinteren Abstützungen 47 hydraulisch ausgefahren, bis diese die Verladeplattform 2 fest auf dem Boden abstützen. Ein durch die Gewichtskraft des Teleskopauslegers 5 oder der aufgenommenen Arbeitsmaschine 38 entstehendes, an der hinteren Achse des Fahrgestells 1 wirkendes Moment kann damit von der hinteren Abstützungen 47 am Boden abgestützt werden.

In einer vorteilhaften Ausführung sind zusätzlich zur hinteren Abstützung 47 der Verladeplattform 2 noch weitere seitliche Abstützungen 16 vorgesehen. Diese sind im Bereich der Verladeplattform 2 fest mit dem Fahrgestell 1 verbunden. In der Transportstellung befinden sich die seitlichen Abstützungen 16 in einer eingefahrenen Position, vom Boden beabstandet und innerhalb des Grundrisses des Fahrgestells 1.

Die nach oben weisende Fläche eines die seitlichen Abstützungen 16 aufnehmenden und am Fahrgestell 1 befestigten Gehäuses bildet gleichzeitig die Lauffläche 18 für die Laufrollen 46 der Verladeplattform 2. In der Ladestellung können die seitlichen Abstützungen 16 horizontal und orthogonal zur Fahrtrichtung 8 über den Grundriss des Fahrgestells 1 hinaus ausgefahren werden. Die an den äußeren Enden angebrachten Stützfüße können in Richtung Boden ausgefahren und am Boden abgestützt werden. Die seitlichen Abstützungen 16 sind paarweise angeordnet, sodass eine beidseitige Abstützung des Fahrgestells 1 erfolgt. Seitliche Abstützungen 16 die im Heckbereich, hinter der Rotationsachse 44 der Verladeplattform 2 am Fahrgestell 1 angebracht werden, sind so ausgelegt, das diese den Bewegungsraum der drehbaren Verladeplattform 2 nicht einschränken.

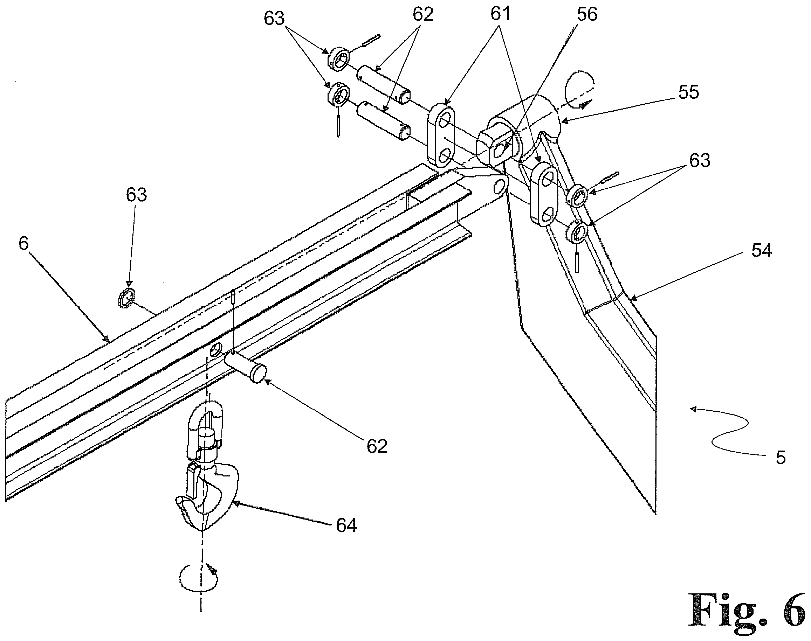

Wie in Fig. 6 dargestellt, weist der Teleskopausleger 5 in den am weitesten von den Schwenklagern 42 entfernten Bereichen der Auslegerenden 54 jeweils einen drehbar in einer Lagerbuchse 55 aufgenommenen Halterungsbolzen 56 auf. Die beiden Halterungsbolzen 56 ragen auf der sich zugewanden Seite um die Hälfte ihrer in den Lagerbuchse 55 aufgenommenen Länge aus den Auslegerenden 54 heraus. An den herausragenden Enden der Halterungsbolzen 56 wird jeweils ein Paar von, mit zwei Löchern versehenen, Befestigungslaschen 61 angebracht. Der Lochabstand entspricht etwa dem doppelten Durchmesser des Halterungsbolzen 56. Die Verbindung mit dem Halterungsbolzen 56 erfolgt über Steckachsen 62, die von verstifteten Sicherungsringen 63 gegen Herausrutschen gesichert werden. Die Befestigungslaschen 61 sind um die Lochachsen beweglich gelagert, wobei die Lochachsen alle orthogonal zur Drehachse des Halterungsbolzen 56 orientiert sind. Durch die Schwerkraft bedingt weisen die Befestigungslaschen 61 nach unten. In den unteren Löchern der Befestigungslaschen 61 wird die Traverse 6 sowohl um die Drehachse der Halterungsbolzen 56 als auch um die Lochachsen der Befestigungslaschen 61 pendelnd zwischen den Auslegerenden 54 aufgenommen. Mittig in der Traverse 6 ist der um seine Hochachse drehbar gelagerter Lasthaken 64 orthogonal zur Traverse 6 befestigt.

Aufgrund der pendelnden Aufhängung weist der Lasthaken 64 oder die am Lasthaken 64 hängende Arbeitsmaschine 38 während der Schwenkbewegung des Teleskopauslegers 5, der Schwerkraft folgend, immer lotrecht nach unten. An dem drehbar in der Traverse 6 aufgenommenen Lasthaken 64 kann die Arbeitsmaschine 38 um deren lotrechte Achse rotiert werden, sodass die Scheibenräder der Arbeitsmaschine 38 zum Schienensystem 22 der Verladeplattform 2 ausgerichtet und die Arbeitsmaschine 38 auf dem Schienensystem 22 abgesetzt werden kann. Dasselbe gilt für das Absetzen der Scheibenräder der Arbeitsmaschine 38 auf einem Gleis (nicht dargestellt), das als Einsatzort der Arbeitsmaschine im Umkreis der Verladeplattform 2 vorgesehen ist.

Für den Transport der Arbeitsmaschine 38 wird die Verladeplattform 2 aus der Ladestellung in die Transportstellung gedreht. Durch das Gewicht einer mit ihrem Schwerpunkt außerhalb der Rotationsachse 44 der Verladeplattform 2 aufgenommenen Arbeitsmaschine 38, können Biegekräfte innerhalb des Basisrahmens 4 der Verladeplattform 2 auftreten, die dazu führen, dass der am weitesten von der Rotationsachse 44 entfernte vordere Bereich der Verladeplattform 2 eine gegenüber dem Fahrgestell 1 zu tiefe Position einnimmt, sodass ein Eindrehen der Verladeplattform 2 in die Transportstellung nicht mehr möglich wäre.

Um in diesem Fall das Eindrehen dennoch zu ermöglichen, befinden sich im vorderen Bereich des Basisrahmens 4 an dessen Unterseite zwei Laufrollen 46, die auf dem gegenüberliegenden Fahrgestell 1, auf der Lauffläche 18 aufsetzen können.

Die Lauffläche 18 ist orthogonal zur Fahrtrichtung 8 auf dem Fahrgestell 1 befestigt. Damit die Laufrollen 46 aus einer tieferen Position das Niveau der Lauffläche 18 erreichen, ist die Lauffläche 18 mit seitlichen Auflauframpen 19 versehen. Die Laufrollen 46 ermöglichen somit das ungehinderte Eindrehen der Verladeplattform 2 und stützen die Verladeplattform 2 in der Transportstellung auf der Lauffläche 18 ab.

Ist die Transportstellung erreicht, wird die Verladeplattform 2 durch Einrasten des Sicherungszapfens 45 in das auf der Trägerplatte 12 befestigte Zapfenlager 15 gegen Verdrehen gesichert. Somit wird auch der Fluidmotor 14 entlastet. In der Transportstellung ist das Schienensystem 22 der Verladeplattform 2 genau zum Schienensystem 22 der Ladefläche 3 ausgerichtet. Eine auf der Verladeplattform 2 aufgenommene Arbeitsmaschine 38 kann von der Verladeplattform 2 auf die Ladefläche 3 bugsiert werden. Je nach Kapazität der Ladefläche 3 oder Größe der Arbeitsmaschine 38 können somit weitere Arbeitsmaschinen 38 oder Stückgüter 39 aufgenommen werden.

### Bezugszeichenliste

- 1: Fahrgestell
- 10: Fahrgestelllängsträger
- 11: Fahrgestell-Mittenebene
- 12: Trägerplatte
- 13: Antriebsritzel
- 14: Antriebsmotor
- 15: Zapfenlager
- 16: seitliche Abstützung
- 17: Stützfüße
- 18: Lauffläche
- 19: Auflauframpe
- 2: Verladeplattform
- 21: Abstellfläche
- 22: Schienensystem
- 23: Absetzleiste
- 3: Ladefläche
- 31: Abdeckung
- 32: Funktionseinheit
- 33: Energieeinheit
- 34: Antriebseinheit
- 35: Steuereinheit
- 36: Bedieneinheit
- 37: Fernbedienung
- 38: Arbeitsmaschine
- 39: Stückgut
- 4: Basisrahmen
- 40: Längsträger
- 41: Lagerbock
- 42: Schwenklager
- 43: Zahnkranz
- 44: Rotationsachse
- 45: Sicherungszapfen
- 46: Laufrolle
- 47: hintere Abstützung
- 5: Teleskopausleger
- 51: Schwenkachse
- 52: Teleskoparm
- 53: Beschlag
- 54: Auslegerende
- 55: Lagerbuchse
- 56: Halterungsbolzen
- 57: Schwenkzylinder
- 58: Maximalhöhe
- 59: Bahnkurve
- 6: Traverse
- 61: Befestigungslasche
- 62: Steckachse
- 63: Sicherungsring
- 64: Lasthaken
- 7: Wegmesseinheit
- 71: Messseil
- 72: Seilklemmung
- 73: Schutzblech
- 74: Regelbereich
- 8: Fahrtrichtung
- ϕ: Schwenkwinkel

## Patentansprüche

1. Lastkraftwagen mit einem mehrachsigen Fahrgestell zum Transportieren, Absetzen und Aufnehmen von Stückgut, enthaltend
- einen um eine horizontale Schwenkachse schwenkbaren Teleskopausleger (5) mit zwei Teleskoparmen (52) und einer drehbar gelagerten Traverse (6), die in Lagern (15) zwischen beweglichen Enden der Teleskoparme (52) angebracht ist,
- einen mittig an der Traverse (6) angeordneten Lasthaken (64), der eine um eine zur Traverse (6) orthogonale Achse frei drehbare Lagerung aufweist,
- das Fahrgestell (1) einen Heckbereich aufweist, der den schwenkbaren Teleskopausleger (5) auf einer gegenüber dem Fahrgestell (1) um eine Rotationsachse (44) drehbaren Verladeplattform (2) aufweist,
**dadurch gekennzeichnet, dass**
- der Verladeplattform (2) auf dem Fahrgestell (1) eine auf gleichen Niveau mit der Verladeplattform (2) befindliche Ladefläche (3) in Fahrtrichtung (8) vorgeordnet und mit einem longitudinalen Verladesystem (22) zum Transport des Stückgutes (39) von der Verladeplattform (2) auf die Ladefläche (3) und umgekehrt ausgerüstet ist,
- die Verladeplattform (2) den Teleskopausleger mit zugehörigen Antrieben und einen Zahnkranz (43) zum Drehen der Verladeplattform (2) um die vertikale Rotationsachse (44) aufweist, wobei in den Zahnkranz (43) einkämmend ein Antriebsritzel (13) eines Antriebsmotors (14) angeordnet ist, der starr am Fahrgestell (1) befestigt ist, um die Verladeplattform (2) um die vertikale Rotationsachse (44) rotieren zu können.

2. Lastkraftwagen nach Anspruch 1, **dadurch gekennzeichnet, dass** die Verladeplattform (2) eine Steuereinheit (35) zur Begrenzung des Bewegungsraums des Teleskopauslegers (5) bei einer Schwenkbewegung um eine horizontale Schwenkachse (51) aufweist, wobei der Teleskopausleger auf eine von dessen Schwenkwinkel abhängige Ausschublänge mittels der Steuereinheit (35) zur Begrenzung des Bewegungsraums mit einer automatischen Höhenbegrenzung von beweglichen Auslegerenden (54) des Teleskopauslegers (5) für jeden beliebigen Schwenkwinkel einstellbar ist.

3. Lastkraftwagen nach Anspruch 1, **dadurch gekennzeichnet, dass** der Antriebsmotor (14) zum Bewegen der Verladeplattform (2) ein Fluidmotor ist.

4. Lastkraftwagen nach Anspruch 1, **dadurch gekennzeichnet, dass** der Antriebsmotor (14) zum Bewegen der Verladeplattform (2) ein Elektromotor ist.

5. Lastkraftwagen nach Anspruch 2, **dadurch gekennzeichnet, dass** zur Überwachung einer Maximalhöhe (58) im Bewegungsraum des Teleskopauslegers (5) Wegmesseinheiten (7) an sich zueinander bewegenden Teilen der Teleskoparme (52) und an zum Schwenken vorgesehenen linear antreibenden Schwenkzylindern (57) für die Teleskoparme (52) vorhanden sind.

6. Lastkraftwagen nach Anspruch 5, **dadurch gekennzeichnet, dass** Wegmesseinheiten (7) zur Erfassung der Ausschublänge des Teleskopauslegers (5) an den beweglichen Auslegerenden (54) der Teleskoparme (52) des Teleskopauslegers (5) und Wegmesseinheiten (7) zur Erfassung des Schwenkwinkels des Teleskopauslegers (5) an den linear bewegten Teilen der Schwenkzylinder (57) der Teleskoparme (52) angebracht sind.

7. Lastkraftwagen nach Anspruch 1, **dadurch gekennzeichnet, dass** Ladefläche (3) und Verladeplattform (2) ein ineinander übergehendes rollfähiges Verladesystem zum Bewegen des Stückguts (39) aufweisen.

8. Lastkraftwagen nach Anspruch 7, **dadurch gekennzeichnet, dass** das rollfähige Verladesystem von Ladefläche (3) und Verladeplattform (2) ein ineinander übergehendes gleisartiges Schienensystem (22) zum longitudinalen Bewegen des Stückgutes (39) enthält.

9. Lastkraftwagen nach Anspruch 1, **dadurch gekennzeichnet, dass** das Fahrgestell (1) eine Energieeinheit (33) zum autarken Betrieb der Verladeplattform (2) aufweist, wobei die Energieeinheit (33) ein Stromerzeuger ist, der zum elektrischen Betreiben einer hydraulischen Antriebseinheit (34) vorgesehen ist.

10. Lastkraftwagen nach Anspruch 1, **dadurch gekennzeichnet, dass** das Fahrgestell (1) eine Energieeinheit (33) zum autarken Betrieb der Verladeplattform (2) aufweist, wobei als Energieeinheit (33) ein Verbrennungsmotor des Lastkraftwagens zum Betrieb einer hydraulischen Antriebseinheit (34) nutzbar ist.

11. Lastkraftwagen nach Anspruch 1, **dadurch gekennzeichnet, dass** das Fahrgestell (1) eine Energieeinheit (33) zum autarken Betrieb der Verladeplattform (2) aufweist, wobei die Energieeinheit (33) ein Stromerzeuger ist, der zum Betreiben eines Elektroantriebs mindestens zur Realisierung der Drehbewegung der Verladeplattform (2) vorgesehen ist.

12. Lastkraftwagen nach Anspruch 2, **dadurch gekennzeichnet, dass** die Steuereinheit (35) zur Begrenzung des Bewegungsraums des Teleskopauslegers (5) eine Positionsberechnung aufweist, die auf Basis einer Winkel-Längensteuerung und -speicherung für gewünschte Absetz- und Aufnahmepunkte des Stückgutes (39) in einem den Lastkraftwagen umgebenden Gelände vorgesehen ist.

13. Lastkraftwagen nach Anspruch 12, **dadurch gekennzeichnet, dass** eine Speichereinheit eine Speicherung von Absetz- und Aufnahmepositionen, von Ausschublängen der Teleskoparme (52) bis zu einer Maximalhöhe (58) und von Absetzpositionen auf der Verladeplattform (2) aufweist, sodass für einen nächsten Bewegungsablauf von Stückgut (39) mittels der Verladeplattform (2) ein einfaches roboterähnliches Nachfahren der gespeicherten Positionen realisierbar ist.

14. Lastkraftwagen nach Anspruch 2, **dadurch gekennzeichnet, dass** die Steuereinheit (35) der Verladeplattform (2) eine mit Bedienelementen für sämtliche Bewegungsfunktionen ausgelegte Fernbedienung (37) aufweist.

15. Lastkraftwagen nach Anspruch 1, **dadurch gekennzeichnet, dass** am Fahrgestell (1) mindestens eine in der Nähe der Rotationsachse (44), unterhalb der Verladeplattform (2) angebrachte Abstützeinrichtung (16) zur Stabilisierung des Fahrgestells (1) im Bereich der Verladeplattform (2) beim Auf- und Abladen des Stückgutes (39) angebracht ist, wobei die Abstützeinrichtung (16) beidseitig transversal zur Fahrtrichtung (8) ausfahrbare, höhenverstellbare Stützfüße aufweist.

## Claims

1. Heavy goods vehicle having a multi-axle chassis for transporting, setting down, and taking up piece goods comprising
- a telescopic boom (5) which is swivelable around a horizontal swivel axle and has two telescopic arms (52) and a rotatably supported cross member (6) which is arranged in bearings (15) between movable ends of the telescopic arms (52),
- a load hook (64) which is arranged in the centre of the cross member (6) and which has a bearing support which is freely rotatable around an axis orthogonal to the cross member (6),
- a rear region of the chassis (1) which has the swivelable telescopic boom (5) on a loading platform (2) which is rotatable relative to the chassis (1) around an axis of rotation (44),
**characterized in that**
- a loading surface (3) located on the same level as the loading platform (2) is arranged in front of the loading platform (2) on the chassis (1) with respect to the driving direction (8) and is outfitted with a longitudinal loading system (22) for transporting the piece goods (39) from the loading platform (2) to the loading surface (3), and vice versa,
- the loading platform (2) has the telescopic boom with associated drives and a gear ring (43) for rotation of the loading platform (2) around the vertical axis of rotation (44), wherein a drive pinion (13) of a drive motor (14) is in meshing engagement with the gear ring (43) and is rigidly fastened to the chassis (1) so as to be able to rotate the loading platform (2) around the vertical axis of rotation (44).

2. Heavy goods vehicle according to claim 1, **characterized in that** the loading platform (2) has a control unit (35) for limiting the movement space of the telescopic boom (5) during a swiveling movement around a horizontal swivel axle (51), wherein the telescopic boom can be adjusted to an extension length that depends upon its swiveling angle by means of the control unit (35) for limiting the movement space having an automatic height limiting of movable boom ends (54) of the telescopic boom (5) for every selected swivel angle.

3. Heavy goods vehicle according to claim 1, **characterized in that** the drive motor (14) for moving the loading platform (2) is a fluid motor.

4. Heavy goods vehicle according to claim 1, **characterized in that** the drive motor (14) for moving the loading platform (2) is an electric motor.

5. Heavy goods vehicle according to claim 2, **characterized in that** displacement measuring units (7) for monitoring a maximum height (58) in the movement space of the telescopic boom (5) are provided at portions of the telescopic arms (52) which move relative to one another and at linearly driving swivel cylinders (57) for the telescopic arms (52), which swivel cylinders (57) are provided for swiveling.

6. Heavy goods vehicle according to claim 5, **characterized in that** displacement measuring units (7) for sensing the extension length of the telescopic boom (5) are arranged at the moving boom ends (54) of the telescopic arms (52) of the telescopic boom (5), and displacement measuring units (7) for sensing the swiveling angle of the telescopic boom (5) are arranged at the linearly moving parts of the swivel cylinders (57) of the telescopic arms (52).

7. Heavy goods vehicle according to claim 1, **characterized in that** the loading surface (3) and loading platform (2) have a mutually merging rollable loading system for moving the piece goods (39).

8. Heavy goods vehicle according to claim 7, **characterized in that** the rollable loading system of loading surface (3) and loading platform (2) comprises a mutually merging track-like rail system (22) for longitudinal movement of the piece goods (39).

9. Heavy goods vehicle according to claim 1, **characterized in that** the chassis (1) has an energy unit (33) for autonomous operation of the loading platform (2), wherein the energy unit (33) is a power generator provided for electrical operation of a hydraulic drive unit (34).

10. Heavy goods vehicle according to claim 1, **characterized in that** the chassis (1) has an energy unit (33) for autonomous operation of the loading platform (2), wherein an internal combustion engine of the heavy goods vehicle can be used as energy unit (33) for operating a hydraulic drive unit (34).

11. Heavy goods vehicle according to claim 1, **characterized in that** the chassis (1) has an energy unit (33) for autonomous operation of the loading platform (2), wherein the energy unit (33) is a power generator which is provided for operating an electric drive at least for implementing the rotational movement of the loading platform (2).

12. Heavy goods vehicle according to claim 2, **characterized in that** the control unit (35) for limiting the movement space of the telescopic boom (5) has a position computation which is provided on the basis of an angle length control and angle length storage for desired depositing sites and pickup sites for setting down and taking up the piece goods (39) in an area surrounding the heavy goods vehicle.

13. Heavy goods vehicle according to claim 12, **characterized in that** a memory unit stores depositing positions and pickup positions, extension lengths of the telescopic arms (52) up to a maximum height (58) and depositing positions on the loading platform (2) so that the stored positions can be retraced in a simple robotic manner for a subsequent sequence of movements of piece goods (39) by means of the loading platform (2).

14. Heavy goods vehicle according to claim 2, **characterized in that** the control unit (35) of the loading platform (2) has a remote control (37) configured with operator controls for all movement functions.

15. Heavy goods vehicle according to claim 1, **characterized in that** at least one supporting device (16) for stabilizing the chassis (1) in the region of the loading platform (2) when loading and unloading the piece goods (39) is arranged at the chassis (1) in the vicinity of the axis of rotation (44) below the loading platform (2), wherein the supporting device (16) has vertically adjustable supporting feet which can be moved out on both sides transverse to the driving direction (8).

## Revendications

1. Camion avec un châssis multi-axes pour le transport, le dépôt et le chargement de marchandises de détail, comprenant
- une flèche télescopique (5) qui peut être pivotée autour d'un axe de pivotement horizontal et qui a deux bras télescopiques (52) et une traverse (6) qui est montée de manière rotative, la traverse (6) étant disposée dans des paliers (15) entre des extrémités déplaçables des bras télescopiques (52),
- un crochet de charge (64) qui est disposé au centre de la traverse (6) et qui a un support de palier qui peut tourner de manière libre autour d'un axe orthogonal à la traverse (6),
- une zone arrière du châssis (1) qui a la flèche télescopique (5) pivotante sur une plate-forme de chargement (2) qui peut tourner par rapport au châssis (1) autour d'un axe de rotation (44),
**caractérisé en ce que**
- une surface de chargement (3) située au même niveau que la plate-forme de chargement (2) est disposée en amont de la plate-forme de chargement (2) sur le châssis (1) dans le sens de la marche (8) et est équipée d'un système de chargement (22) longitudinal pour transporter les marchandises de détail (39) de la plate-forme de chargement (2) sur la surface de chargement (3), et vice versa,
- la plate-forme de chargement (2) a la flèche télescopique avec des entraînements correspondants et une couronne dentée (43) pour tourner la plate-forme de chargement (2) autour de l'axe de rotation (44) vertical, un pignon d'entraînement (13) d'un moteur d'entraînement (14) s'engrenant dans la couronne dentée (43), le pignon d'entraînement (13) étant fixé de manière rigide au châssis (1) de façon à pouvoir tourner la plate-forme de chargement (2) autour de l'axe de rotation (44) vertical.

2. Camion selon la revendication 1, **caractérisé en ce que** la plate-forme de chargement (2) a une unité de commande (35) pour limiter l'espace de mouvement de la flèche télescopique (5) pendant un mouvement pivotant autour d'un axe de pivotement (51) horizontal, la flèche télescopique pouvant être ajustée à une longueur d'extension qui dépend de son angle de pivotement au moyen de l'unité de commande (35) pour limiter l'espace de mouvement ayant une limitation automatique de l'hauteur d'extrémités de flèche (54) déplaçables de la flèche télescopique (5) pour chaque angle de pivotement sélectionné.

3. Camion selon la revendication 1, **caractérisé en ce que** le moteur d'entraînement (14) pour déplacer la plate-forme de chargement (2) est un moteur à fluide.

4. Camion selon la revendication 1, **caractérisé en ce que** le moteur d'entraînement (14) pour déplacer la plate-forme de chargement (2) est un moteur électrique.

5. Camion selon la revendication 2, **caractérisé en ce que** des unités de mesure de déplacement (7) pour surveiller une hauteur maximale (58) dans l'espace de mouvement de la flèche télescopique (5) sont prévues à des portions des bras télescopiques (52) qui se déplacent l'une par rapport à l'autre et à des cylindres de pivotement (57) pour les bras télescopiques (52), les cylindres de pivotement (57) entraînant de manière linéaire et étant prévus pour pivoter.

6. Camion selon la revendication 5, **caractérisé en ce que** des unités de mesure de déplacement (7) pour détecter la longueur d'extension de la flèche télescopique (5) sont disposées aux extrémités de flèche (54) déplaçables des bras télescopiques (52) de la flèche télescopique (5), et des unités de mesure de déplacement (7) pour détecter l'angle de pivotement de la flèche télescopique (5) sont disposées aux parties déplacées de manière linéaire des cylindres de pivotement (57) des bras télescopiques (52).

7. Camion selon la revendication 1, **caractérisé en ce que** la surface de chargement (3) et la plate-forme de chargement (2) ont un système de chargement, qui est capable de rouler et en continuité l'un avec l'autre, pour déplacer les marchandises de détail (39).

8. Camion selon la revendication 7, **caractérisé en ce que** le système de chargement capable de rouler de surface de chargement (3) et plate-forme de chargement (2) comprend un système de rails (22), qui est semblable à une voie et en continuité l'un avec l'autre, pour déplacer des marchandises de détail (39) longitudinalement.

9. Camion selon la revendication 1, **caractérisé en ce que** le châssis (1) a une unité d'énergie (33) pour l'opération autonome de la plate-forme de chargement (2), l'unité d'énergie (33) étant un générateur de puissance prévu pour l'opération électrique d'une unité d'entraînement (34) hydraulique.

10. Camion selon la revendication 1, **caractérisé en ce que** le châssis (1) a une unité d'énergie (33) pour l'opération autonome de la plate-forme de chargement (2), un moteur à combustion du camion pouvant être utilisé en tant qu'unité d'énergie (33) pour l'opération d'une unité d'entraînement (34) hydraulique.

11. Camion selon la revendication 1, **caractérisé en ce que** le châssis (1) a une unité d'énergie (33) pour l'opération autonome de la plate-forme de chargement (2), l'unité d'énergie (33) étant un générateur de puissance prévu pour l'opération d'un entraînement électrique au moins pour réaliser le mouvement de rotation de la plate-forme de chargement (2).

12. Camion selon la revendication 2, **caractérisé en ce que** l'unité de commande (35) pour limiter l'espace de mouvement de la flèche télescopique (5) a un calcul de position qui est prévu sur la base d'une commande de longueur dépendant de l'angle et d'un enregistrement de longueur dépendant de l'angle pour des lieus de dépôt et des lieus de chargement désirés des marchandises de détail (39) dans le terrain environnant le camion.

13. Camion selon la revendication 12, **caractérisé en ce qu'**une unité de mémoire enregistre des positions de dépôt et des positions de chargement, des longueurs d'extension des bras télescopiques (52) jusqu'à une hauteur maximale (58) et des positions de dépôt sur la plate-forme de chargement (2) de telle façon que les positions enregistrées peuvent être retracées en manière robotique simple pour une séquence de mouvements suivante de marchandises de détail (39) au moyen de la plate-forme de chargement (2).

14. Camion selon la revendication 2, **caractérisé en ce que** l'unité de commande (35) de la plate-forme de chargement (2) a une télécommande (37) configurée avec des éléments de commande pour toutes les fonctions de mouvement.

15. Camion selon la revendication 1, **caractérisé en ce qu'**au moins un dispositif de support (16) pour stabiliser le châssis (1) dans la zone de la plate-forme de chargement (2) pendant le chargement et déchargement des marchandises de détail (39) est disposé au châssis (1) à proximité de l'axe de rotation (44) au-dessous de la plate-forme de chargement (2), le dispositif de support (16) ayant des pieds de support ajustable verticalement qui peuvent être déployés à l'extérieur des deux côtés transversal au sens de la marche (8).
